(19) Europäisches Patentamt
European Patent Office
Office européen des brevets

(11) Veröffentlichungsnummer: **0 205 891**
**B1**

(12) # EUROPÄISCHE PATENTSCHRIFT

(45) Veröffentlichungstag der Patentschrift: **25.01.89**

(51) Int. Cl.⁴: **C07F 7/14,** C07F 7/18, C08G 77/52, C07F 7/12

(21) Anmeldenummer: **86106594.4**

(22) Anmeldetag: **15.05.86**

(54) **Phenylengruppen-haltige Organosilane, Verfahren zu ihrer Herstellung.**

(30) Priorität: **25.05.85 DE 3518878**

(43) Veröffentlichungstag der Anmeldung: **30.12.86 Patentblatt 86/52**

(45) Bekanntmachung des Hinweises auf die Patenterteilung: **25.01.89 Patentblatt 89/4**

(84) Benannte Vertragsstaaten: **AT BE CH DE FR GB IT LI NL SE**

(56) Entgegenhaltungen:
**EP-A- 0 072 435**
**EP-A- 0 136 429**
**US-A- 4 188 454**

**CHEMICAL ABSTRACTS, Band 66, Nr. 15, 10. April 1967, Seite 6177, Zusammenfassung Nr. 65564u, Columbus, Ohio, US; N.S. NAMETKIN et al.: "Alkylation of aromatic compounds by allylsilane chlorides"**
**CHEMICAL ABSTRACTS, Band 69, Nr. 1, 1. Juli 1968, Seite 292, Zusammenfassung Nr. 2973t, Columbus, Ohio, US; K.A. ANDRIANOV et al.: "Synthesis and study of the properties of bis(trichloro-silylethyl)benzene and of some of its derivatives"**

(73) Patentinhaber: **Degussa Aktiengesellschaft, Weissfrauenstrasse 9, D-6000 Frankfurt am Main 1(DE)**

(72) Erfinder: **Panster, Peter, Dr., Im Lochseif 8, D-6458 Rodenbach(DE)**
Erfinder: **Kleinschmit, Peter, Dr., Wildaustrasse 19, D-6450 Hanau 9(DE)**

**EP 0 205 891 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft neuartige Phenylengruppen-haltige Organobisilylverbindungen, die als Monomervorstufe für entsprechende Organopolysiloxane und weitere polymere Folgeprodukte von Bedeutung sind sowie Verfahren zur Herstellung dieser neuen Produkte.

Organopolysiloxane mit bestimmten funktionellen Gruppen weisen per se oder als Träger von chemischen Wirkstoffen eine Reihe von Vorteilen gegenüber rein organischen oder anorganischen Polymeren auf. Unter solche Systeme fallen z.B. Ionenaustauscher, heterogenisierte Komplexkatalysatoren oder immobilisierte Enzyme. Anorganische Polymere, z.B. Kieselgel oder Aluminiumoxid, besitzen zwar im Gegensatz zu organischen Polymeren die Vorteile einer festen starren Struktur, einer hohen Temperatur- sowie Alterungsbeständigkeit, der Nichtquellbarkeit und Unlöslichkeit in organischen Lösungsmitteln sowie der leichten Zugänglichkeit der an ihnen verankerten funktionellen Gruppen. Ihre Nachteile liegen jedoch in einer beschränkten Funktionalisierbarkeit und in der relativ schwachen Verankerung der funktionellen Gruppen am polymeren Feststoff.

Um diese Nacheile wenigstens teilweise zu vermeiden, wurde z.B. schon versucht, Silicagel mit einem Überzug aus Polystyrol zu versehen (H. Arai, T. Kaneko und T. Kunugi, Chemistry Letters 1975, 265), um so die guten Eigenschaften des anorganischen Trägers mit denen des organischen Stoffes zu kombinieren. Dies gelingt dabei jedoch nur sehr bedingt.

Wie eingangs erwähnt, ist dagegen eine Verwendung von Organopolysiloxanen, wie sie z.B. in der Europäischen Patentanmeldung 0 072 435 beschrieben werden, von Vorteil. Solche Organopolysiloxane haben ein Polymergerüst aus einer Silicium-Sauerstoffgrupppierung der allgemeinen Formel

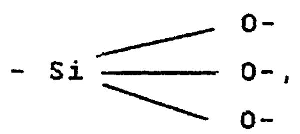

welche über eine zweibindige organische Gruppe, z.B.

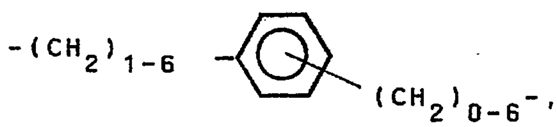

gemäß

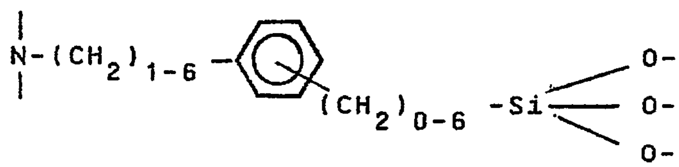

an Aminstickstoff gebunden ist. Damit kommt man dem Ziel, ein optimales Trägermaterial zu schaffen, schon weit näher. Eine wichtige Voraussetzung dafür besteht jedoch darin, zunächst geeignete Monomervorstufen zu entwickeln und bereitzustellen. Darin besteht die Aufgabe der vorliegenden Erfindung.

Diese Aufgabe wird erfindungsgemäß durch die Synthese neuartiger Phenylengruppen-haltiger monomerer Organobisilyl-Verbindungen gelöst, die sich leicht zu entsprechenden Organopolysiloxanen umsetzen lassen. Sowohl die Organosilane als auch die daraus hergestellten Organopolysiloxane können nach bekannten Methoden der organischen Synthese funktionalisiert werden, um sie auf eine gewünschte Verwendung abzustimmen.

Gegenstand der Erfindung sind Phenylengruppen-haltige Organosilane, die dadurch gekennzeichnet sind, daß sie die allgemeine Formel

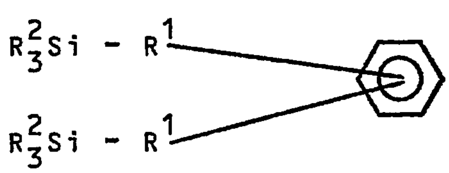

(1)

besitzen, in der jeweils alle 3 denkbaren Isomeren in bezug auf die Stellung der $R^2_3Si–R^1$-Substituenten an der Phenylengruppe nebeneinander vorliegen können, wobei die Brückenglieder $R^1$ für die Gruppen $–CH_2–CH_2–$ oder $CH_3–CH<$ stehen und gleich oder verschieden sein können, und die Substituenten $R^2$

für Chlorid oder einen linearen oder verzweigten Alkoxirest mit 1 bis 3 C-Atomen stehen und gleich oder verschieden sein können, mit Ausnahme der Verbindungen p-$C_6H_4((CH_2)_2SiCl_3)_2$ und p-$C_6H_4$–$((CH_2)_2Si(OCH_3)_3)_2$ sowie Gemischen aus o-, m-, p-$C_6H_4((CH_2)_2Si(OCH_3)_3)_2$.

Das Mischungsverhältnis der Isomerengemische bezüglich der Stellung der $R^2_3Si$–$R^1$-Substituenten an der Phenylengruppe kann beliebig sein. Es kann sowohl überwiegend das ortho- als auch das meta- oder auch das para-Isomere vorliegen. Ebenso können auch nur zwei Isomeren gegeben sein.

Es wurde gefunden, daß Art und Zusammensetzung der Isomeren keinen Einfluß auf das Polykondensationsverhalten und auch keinen oder nur geringen Einfluß auf die Eigenschaften der daraus erhältlichen Phenylengruppen-haltigen Organopolysiloxane haben.

Die Erfindung erstreckt sich nicht auf die aus CA 66, 1967, ref. 65 564 u bereits bekannte Verbindung p-$C_6H_4((CH_2)_2SiCl_3)_2$, die aus US-A 4 188 454 bereits bekannte Verbindung p-$C_6H_4((CH_2)_2Si(OCH_3)_3)_2$ sowie Gemischen aus o-, m-, p-$C_6H_4((CH_2)_2Si(OCH_3)_3)_2$, welche überdies zu anderen Zwecken synthetisiert worden sind als zur Bereitstellung vorteilhafter Organosilanmonomerer, die sich leicht zu entsprechenden Organopolysiloxanen umsetzen lassen.

Weitere Gegenstände der Erfindung sind auch zwei Verfahren zur Herstellung der erfindungsgemäßen Phenylengruppen-haltigen Organosilane. Das erste Verfahren ist dadurch gekennzeichnet, daß eine doppelt ungesättigte Verbindung der Formel

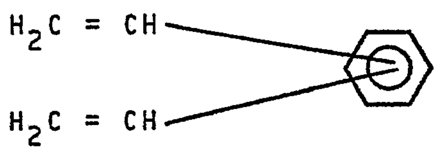

(2)

in der alle 3 denkbaren Isomeren in bezug auf die Stellung der $H_2C$ = CH-Substituenten an der Phenylengruppe nebeneinander vorliegen können, bei einer Temperatur von –78 bis 200°C und einem Druck, welcher der Summe der Partialdrucke der Komponenten der Reaktionsmischung bei der jeweiligen Temperatur entspricht, ohne oder mit Verwendung eines Lösungsmittels, gegebenenfalls in Gegenwart einer Verbindung der Formel

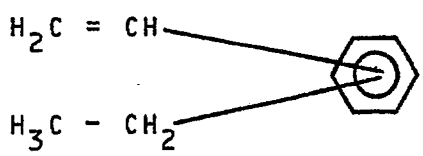

(3)

in der alle 3 denkbaren Isomeren in bezug auf die Stellung der $H_2C$ = CH- und $H_3C$–$CH_2$-Substituenten an der Phenylengruppe nebeneinander vorliegen können, mit hinsichtlich der vorhandenen Vinylgruppen stöchiometrischen oder überschüssigen Menge Trichlorsilan oder Trialkoxisilan der Formel

$HSiR^2_3$, (4)

in der $R^2$ für einen linearen oder verzweigten Alkoxirest mit 1–3 C-Atomen steht, in Gegenwart eines Hydrosilylierungskatalysators umgesetzt und das Produkt gegebenenfalls durch Destillation, vorzugsweise im Vakuum, gereinigt wird.

Das in der Umsetzung erhaltene Produkt kann im Rohzustand oder nach der Reinigung der weiteren Verwendung zugeführt werden.

Die Verwendung eines Lösungsmittels bei der Addition des Trichlorsilans oder Trialkoxisilans an Divinylbenzol ist nicht erforderlich. Sofern gewünscht, kann jedes Lösungsmittel eingesetzt werden. Es eignen sich prinzipiell alle Solvenzien, die keine Reaktion mit Trichlorsilan oder Trialkoxisilanen eingehen, also z.B. gesättigte Kohlenwasserstoffe oder aromatische Verbindungen, wie z.B. Toluol, oder chlorierte Verbindungen, wie z.B. $CCl_4$, $CHCl_3$, etc.

Die Verbindung nach Formel (3) kann im technischen Rohmaterial vorliegen. Sie wirkt sich nicht störend aus, denn die bei der Hydrosilylierung entstehenden Chlorsilan-Nebenprodukte – überwiegend handelt es sich um Verbindungen der Formel

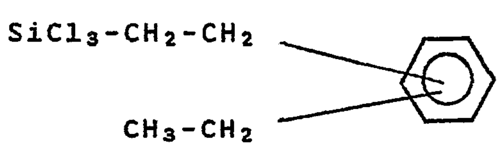

–

können leicht direkt oder erst nach einer Veresterung der Chlorsilangruppierung auf destillativem Wege abgetrennt und einer geeigneten Verwendung zugeführt werden.

Brauchbare Hydrosilylierungskatalysatoren sind Platinverbindungen oder elementares Platin auf einem Träger. Bevorzugt wird Hexachloroplatinsäure oder Platin auf Kohle.

Generell wird bei der Hydrosilylierung überwiegend ein Produkt gebildet, bei dem die Silylgruppen in Endstellung stehen.

Die genaue Verteilung hängt vor allem von dem verwendeten Katalysator und der angewendeten Reaktionstemperatur ab. Niedrige Reaktionstemperaturen begünstigen grundsätzlich die Bildung der endständigen Silylverbindung. Hohe Selektivität (bis zu 90% und darüber) zeigt z.B. die Hexachlorplatinsäure oder deren Kombination mit $PPh_3$. Obwohl das Produkt mit endständigen Silylgruppen bevorzugt wird, wirkt sich jedoch ein Anteil von bis zu 20–30% an Produkten mit innenständigen Silylgruppen nicht nachteilig auf die vorgesehenen Anwendungen der erfindungsgemäßen Silane aus.

Die erfindungsgemäßen Organosilane nach Formel (1), in denen die Substituenten $R^2$ für einen linearen oder verzweigten Alkoxirest mit 1–3 C-Atomen stehen, lassen sich auch durch Veresterung der erfindungsgemäßen Verbindungen

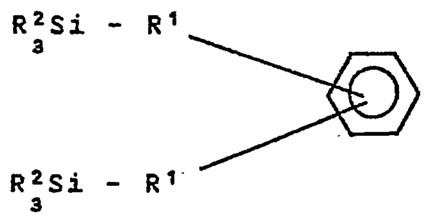

,

in der $R^2$ für Chlorid steht, mit linearen oder verzweigten Alkoholen mit 1–3 C-Atomen erhalten. Diese Veresterung kann direkt nach der Hydrosilylierungsreaktion erfolgen, ohne daß zuvor eine destillative Reinigung der Hydrosilylierungsprodukte durchgeführt wird. Alternativ kann natürlich auch vorher eine Reinigung erfolgen.

Die Veresterungsreaktion selbst gestaltet sich dabei in der Weise, daß Verbindungen der Formel

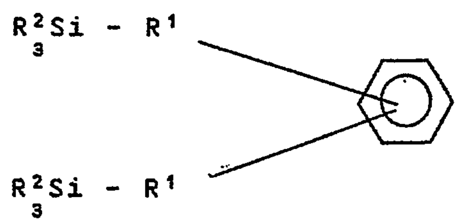

,

in der $R^2$ für Chlorid steht, mit stöchiometrischen oder überschüssigen Mengen eines linearen oder verzweigten Alkohols mit 1–3 C-Atomen, bei Temperaturen von –20–200°C bis zur nahezu vollständigen oder vollständigen Freisetzung der theoretisch möglichen Menge Chlorwasserstoffgas umgesetzt und der gegebenenfalls vorhandene Alkoholüberschuß aus dem Produkt entfernt und/oder das Produkt durch Destillation, vorzugsweise im Vakuum, gereinigt wird.

Diese sog. Alkoholyse der Phenylengruppen-haltigen Chlorsilane der Formel

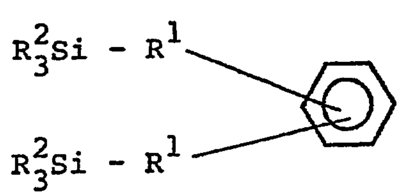

erfolgt analog zur bekannten Alkoholyse anderer Chlorsilane. Hierbei wird stets eine mehr oder minder große Menge an Oligomeren gebildet. Diese Oligomeren können jedoch bei den meisten Anwendungen, dies gilt auch im Fall der erfindungsgemäßen Silane nach Formel (1), genau so verwendet werden, wie die entsprechenden Monomeren. Eine destillative Reinigung der Phenylengruppen-haltigen Organosilane nach der Veresterungsreaktion ist nicht erforderlich, wenn die Produkte z.B. als Rohstoffe für entsprechende Polysiloxane dienen. Sofern gewünscht, kann während der Alkoholyse auch ein trockenes Inertgas durch die Reaktionsmischung geleitet werden, um das entstehende Chlorwasserstoffgas möglichst rasch auszutreiben. Natürlich können anstelle der Chlorsilane auch die Brom- und Jodsilane eingesetzt werden.

Beispiel 1

1212 g eines Gemisches bestehend zu ca. 75 Gew.-% aus Divinylbenzol mit einem ortho : meta : para-Verhältnis von 12 : 65 : 23 und zu ca. 25 Gew.-% aus Ethyl-vinylbenzol wurden mit 143,5 mg $H_2PtCl_6 \cdot 6H_2O$, gelöst in 20 ml Isopropanol, und mit 72,6 mg $PPh_3$, gelöst in 20 ml $CH_2Cl_2$, versetzt. Zu dieser Mischung wurden in einem 4 l Dreihalskolben der mit KPG-Rührer, Innenthermometer, Intensivkühler und Tropftrichter versehen war, innerhalb von 2,0 h 2200 g Trichlorsilan zugetropft. Durch ständiges Kühlen des Reaktionskolbens mit Eis wurde dabei die Innentemperatur bei 70–75°C gehalten.

Nach einer Stunde Nachreaktion bei derselben Temperatur wurde der Reaktionskolben mit einer 60 cm Vigreuxkolonne versehen und der Kolbeninhalt unter Vakuum fraktioniert destilliert. Neben einem relativ niedrig siedenden Vorlauf, der noch etwas unreagiertes Vinylgruppen-haltiges Ausgangsmaterial enthielt, wurden zunächst 620 g einer bei 102–105°C/0,2 mbar siedenden Fraktion isoliert, bei der es sich der NMR-spektroskopischen Untersuchung und der elementaranalytischen Untersuchung zufolge zu über 90% um die isomere Verbindung

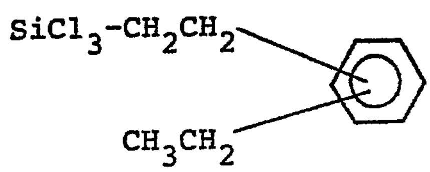

handelte. Anschließend wurden bei einer Temperatur von 155–163°C und einem Druck von 0,1 mbar 2480 g des gewünschten Produkt-Isomerengemisches in Form einer farblosen Flüssigkeit mit der Dichte $d_4^{20}$ = 1,34 g/cm³ erhalten. Dem NMR-Spektrum zufolge handelt es sich zu rund 90% um die endständigen Additionsverbindungen

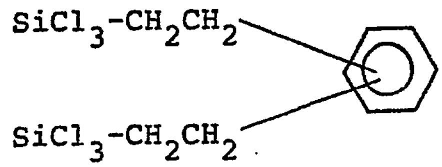

Die Isomerenverteilung stimmte mit der Isomerenverteilung des Ausgangsmaterials überein. Zu ca. 10% waren die innenständigen Additionsverbindungen

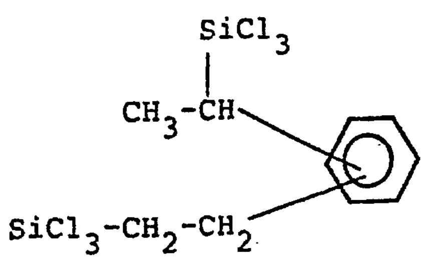

und

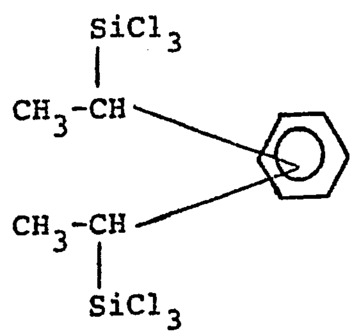

gebildet worden.

| Elementaranalysen | % C | % H | % Si | % Cl |
|---|---|---|---|---|
| Theorie | 29,95 | 3,02 | 14,00 | 53,03 |
| Gefunden | 29,40 | 3,15 | 13,79 | 53,20 |

Die Ausbeute an dem gewünschten Produktgemisch hätte noch gesteigert werden können, wenn die eingesetzte $HSiCl_3$-Menge vergrößert worden wäre.

Beispiel 2

1000 g des nach Beispiel 1 hergestellten Produkts, bestehend zu ca. 90% aus dem ortho-, meta- und para-Isomerengemisch (Isomerenverteilung: 12 Gew.-% / 65 Gew.-% / 23 Gew.-%) der Verbindung

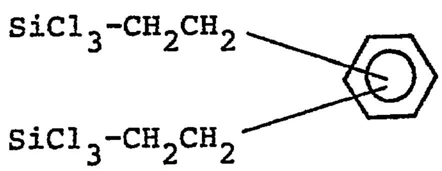

und zu ca. 10% aus den Verbindungen

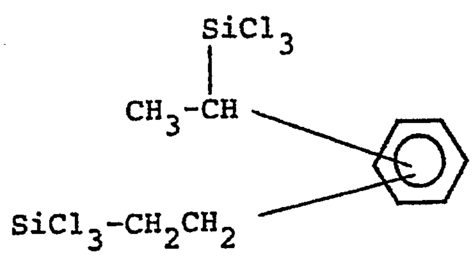

und

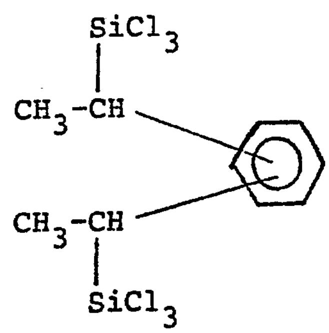

(gewichtsmäßige Mengenverteilung 2 : 1)

mit jeweils der gleichen Isomerenverteilung, wurden in einem 4 1-Vierhalskolben vorgelegt, der mit einem Innenthermometer, KPG-Kühler, Intensivrückflußkühler (Kühlsole: –20°C) und Tropftrichter versehen war.

Der Gasabgang des Intensiv-Rückflußkühlers war an ein Gefäß angeschlossen, das mit 2,5 l 40%iger Natronlauge gefüllt war. Nach dem Aufheizen des Ausgangsmaterials auf 40°C wurden unter kräftigem Rühren 723,6 g Ethanol innerhalb von 2,5 h zugetropft. Nach Beendigung der Ethanol-Zugabe wurde der Tropftrichter entfernt und durch ein Gaseinleitungsrohr ersetzt, über das getrockneter Stickstoff in das Reaktionsgemisch eingeblasen wurde. Gleichzeitig wurde innerhalb von 1,5 h auf Rückflußtemperatur aufgeheizt. Es wurde weiterhin noch 4 h unter Rückfluß gerührt, bis nahezu keine HCl-Entwicklung mehr festgestellt werden konnte. Anschließend wurde das gebildete Produkt über eine 40 cm Vigreuxkolonne fraktioniert destilliert. Als Hauptfraktion wurden bei einer Übergangstemperatur von 170–173°C/0,05 mbar 1011 g (88,4% der Theorie) des gewünschten Produkts mit den o-, ne- und p-Isomeren

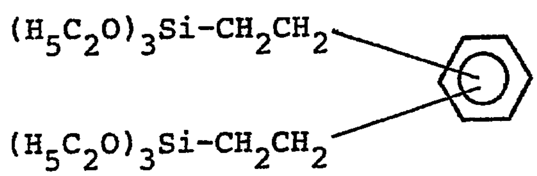

bzw.

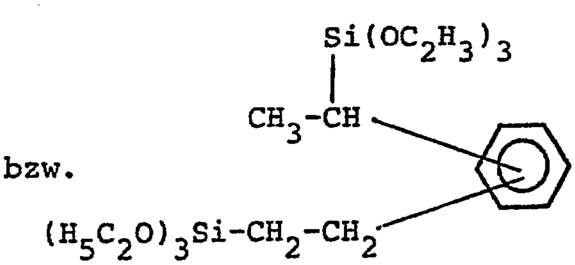

und

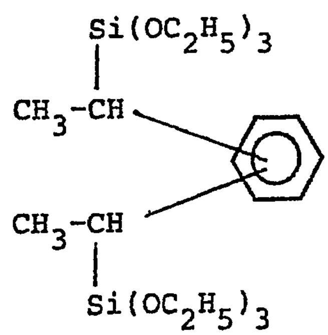

(entsprechend der im Ausgangsmaterial vorgegebenen gewichtsmäßigen Mengenverteilung) erhalten $d_4^{20}$ : 0,99 g/cm³).

| Elementaranalysen | % C | % H | % Si |
|---|---|---|---|
| Theorie | 57,60 | 9,23 | 12,24 |
| Gefunden | 56,48 | 9,20 | 11,86 |

Bei dem nach der Destillation verbliebenen Sumpfrückstand handelte es sich, wie NMR-spektroskopisch nachgewiesen wurde, um die entsprechenden oligomeren Produkte, die wie bei den meisten Veresterungsreaktionen von Halogensilanen, auch bei dieser Alkoholyse gebildet worden waren.

Beispiel 3

1000 g des nach Beispiel 1 hergestellten Produkts wurden analog zu Beispiel 2 mit Methanol verestert. Unter analogen apparativen Verhältnissen wurden 505 g Methanol innerhalb von 4 h bei Raumtemperatur zu dem Ausgangsmaterial zudosiert. Anschließend wurde innerhalb von 2 h auf Rüchflußtemperatur aufgeheizt und weitere 3 h unter Rückfluß gerührt. Nach Abziehen von überschüssigem Methanol bei einer Temperatur von 100°C/20 mbar wurden 918, 2 g der gewünschten isomeren Produkte

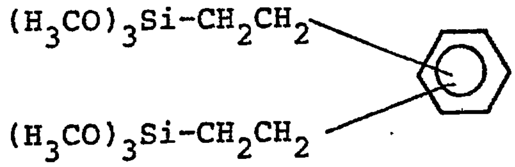

bzw.

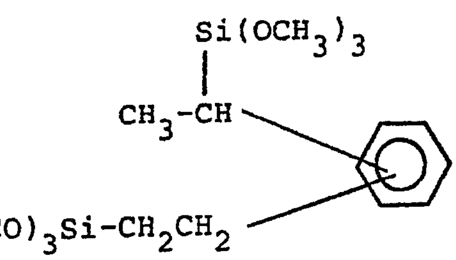

und

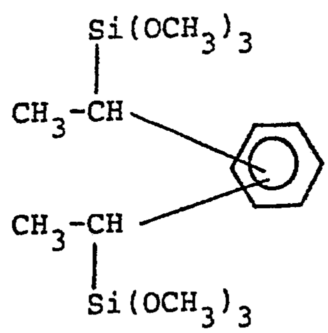

erhalten. Da bei der Methanolyse von Chlorsilanen generell ein höherer Anteil von oligomeren Verbindungen als bei der Ethanolyse gebildet wird, wurde auf eine Ausbeuteschmälernde Destillation verzichtet und das Produkt direkt der Weiterverarbeitung zugeführt. Das Produkt wurde lediglich NMR-spektroskopisch vermessen und elementaranalytisch untersucht. Das NMR-Spektrum bestätigte die erwartete Zusammensetzung.

| Elementaranalysen | % C | % H | % Si | % Cl |
|---|---|---|---|---|
| Theorie | 51,30 | 8,07 | 15,00 | 0 |
| Gefunden | 49,97 | 7,86 | 14,72 | 1,0 |

Beispiel 4

500 g eines Gemisches bestehend zu ca. 92% aus Divinylbenzol mit einem ortho : meta : para-Verhältnis von 20 : 55 : 25 und zu ca. 8% aus Ethzl-vinylbenzol wurden mit 50 mg $H_2PtCl_6 \cdot 6H_2O$, gelöst in 10 ml Isopropanol, versetzt. Analog zu Beispiel 1 wurden zu dieser Mischung bei 80°C 1250 g $HSi(OC_2H_5)_3$ innerhalb von 2 h zugetropft. Nach 4 h Nachreaktion bei derselben Temperatur wurde das Produkt unter Vakuum fraktioniert destilliert. Es konnten 1507,4 g (93,0% der Theorie) des gewünschten Produktgemisches, das zu rund 85% aus den endständigen Additionsverbindungen und zu ca. 15% aus den innenständigen Additionsverbindungen, jeweils in der vorgegebenen Isomerenverteilung, erhalten werden.

## Patentansprüche

1. Phenylengruppen-haltige Organosilane, dadurch gekennzeichnet, daß sie die allgemeine Formel

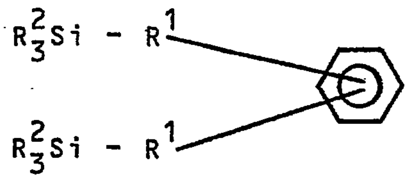

(1)

besitzen, in der jeweils alle 3 denkbaren Isomeren in bezug auf die Stellung der $R^2_3Si-R^1$-Substituenten an der Phenylengruppe nebeneinander vorliegen können, wobei die Brückenglieder $R^1$ für die Gruppen $-CH_2-CH_2-$ oder $CH_3-CH<$ stehen und gleich oder verschieden sein können, und die Substituenten $R^2$ für Chlorid oder einen linearen oder verzweigten Alkoxirest mit 1 bis 3 C-Atomen stehen und gleich oder verschieden sein können, mit Ausnahme der Verbindungen $p\text{-}C_6H_4((CH_2)_2SiCl_3)_2$ und $p\text{-}C_6H_4((CH_2)_2Si(OCH_3)_3)_2$ sowie Gemischen aus o-, m-, $p\text{-}C_6H_4((CH_2)_2Si(OCH_3)_3)_2$.

2. Verfahren zur Herstellung der Verbindungen nach Anspruch 1, dadurch gekennzeichnet, daß eine doppelt ungesättigte Verbindung der Formel

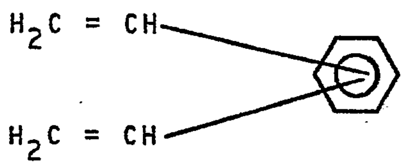

(2)

in der alle 3 denkbaren Isomeren in bezug auf die Stellung der $H_2C = CH$-Substituenten an der Phenylengruppe nebeneinander vorliegen können, bei einer Temperatur von –78 bis 200°C und einem Druck, welcher der Summe der Partialdrucke der Komponenten der Reaktionsmischung bei der jeweiligen Temperatur entspricht, ohne oder mit Verwendung eines Lösungsmittels, gegebenenfalls in Gegenwart einer Verbindung der Formel

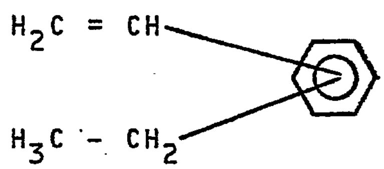

(3)

in der alle 3 denkbaren Isomeren in bezug auf die Stellung der $H_2C = CH$- und $H_3C-CH_2$-Substituenten an der Phenylengruppe nebeneinander vorliegen können, mit hinsichtlich der vorhandenen Vinylgruppen stöchiometrischen oder überschüssigen Menge Trichlorsilan oder Trialkoxisilan der Formel

$HSiR^2_3$, (4)

in der $R^2$ für einen linearen oder verzweigten Alkoxirest mit 1–3 C-Atomen steht, in Gegenwart eines Hydrosilylierungskatalysators umgesetzt und das Produkt gegebenenfalls durch Destillation, vorzugsweise im Vakuum, gereinigt wird.

3. Verfahren zur Herstellung von Verbindungen nach Anspruch 1, in denen $R^2$ in Formel (1) für einen linearen oder verzweigten Alkoxirest mit 1–3 C-Atomen steht, dadurch gekennzeichnet, daß eine Verbindung

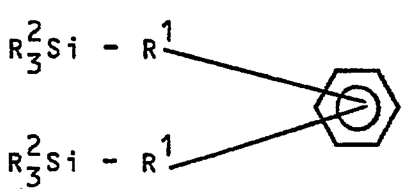

(1),

in der $R^2$ für Chlorid steht, mit stöchiometrischen oder überschüssigen Mengen eines linearen oder verzweigten Alkohols mit 1–3 C-Atomen, bei Temperaturen von –20°C bis 200°C bis zur nahezu vollständigen oder vollständigen Freisetzung der theoretisch möglichen Menge Chlorwasserstoffgas umgesetzt, der gegebenenfalls vorhandene Alkoholüberschuß aus dem Produkt entfernt und/oder das Produkt durch Destillation, vorzugsweise im Vakuum, gereinigt wird.

4. Verwendung der nach Anspruch 2 oder 3 erhältlichen Phenylengruppen-haltigen Organosilane gemäß Anspruch 1 zur Herstellung der entsprechenden Organopolysiloxane.

## Claims

1. Organosilanes containing phenylene groups, characterized in that they have the following general formula

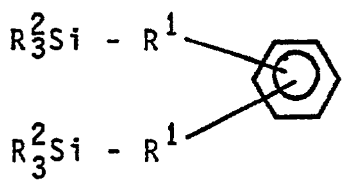

(1')

in which all 3 possible isomers may be present adjacent one another in relation to the position of the $R_3^2Si-R^1$ substituents at the phenylene group, the bridge members $R^1$ stand for the groups $-CH_2-CH_2-$ or $CH_3-CH<$ and may be the same or different while the substituents $R^2$ stand for chloride or a linear or branched $C_1-C_3$ alkoxy group and may be the same or different, with the exception of compounds $p-C_6H_4((CH_2)_2SiCl_3)_2$ and $p-C_6H_4((CH_2)_2Si(OCH_3)_3)_2$ and also mixtures of o-, m-, $p-C_6H_4((CH_2)_2Si(OCH_3)_3)_2$.

2. A process for the production of the compounds claimed in claim 1, characterized in that a di-unsaturated compound corresponding to the following formula

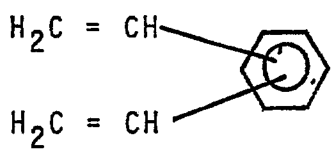

(2)

in which all 3 possible isomers may be present adjacent one another in relation to the position of the $H_2C=CH$-substituents at the phenylene group, is reacted with a stoichiometric or excess quantity, based on the vinyl groups present, of a trichlorosilane or trialkoxy silane corresponding to the following formula

$HSiR_3^2$, (4)

in which $R^2$ is a linear or branched $C_1-C_3$ alkoxy group, at a temperature of –78 to 200° and under a pressure corresponding to the sum of the partial pressures of the components of the reaction mixture at the particular temperature, with or without a solvent in the presence of a hydrosilylation catalyst and optionally in the presence of a compound corresponding to the following formula

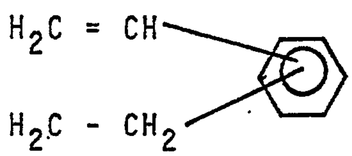

(3)

in which all 3 possible isomers may be present adjacent one another in relation to the position of the $H_2C=CH$- and $H_3C-CH_2$ substituents at the phenylene group, and the product is optionally purified by distillation, preferably in vacuo.

3. A process for the production of the compounds claimed in claim 1 in which $R^2$ in formula (1) is a linear or branched $C_1-C_3$ alkoxy group, characterized in that a compound corresponding to the following formula

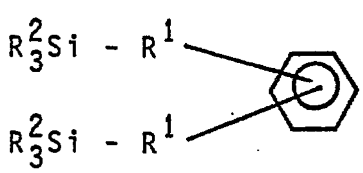

(1)

in which $R^2$ is a chloride, is reacted with stoichiometric or excess quantities of a linear or branched $C_1$–$C_3$ alcohol at temperatures of –20°C to 200°C until the theoretically possible quantity of hydrogen chloride has been completely or almost completely released, the excess alcohol present, if any, is removed from the product and/or the product is purified by distillation, preferably in vacuo.

4. The use of the organosilanes containing phenylene groups claimed in claim 1, obtainable by the process claimed in claim 2 or 3, for the production of the corresponding organopolysiloxanes.

**Revendications**

1. Organosilanes contenant des groupes phénylène caractérisé en ce qu'ils présent la formule générale:

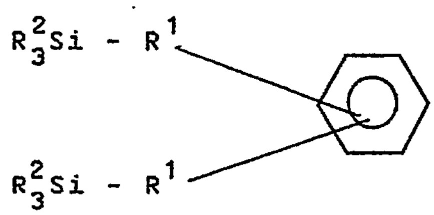

(1)

où il peut exister chaque fois, à côté les uns des autres, les trois isomères concevables en rapport avec les positions des substituants $R^2_3$ Si–$R^1$ sur le groupe phénylène, les éléments $R^1$ formant pont représentent les groupes $-CH_2-CH_2$, ou $CH_3-CH<$; et pouvant être semblables ou différents, et les substituants $R^2$ réprésentent un chlorure, ou un groupe alcoxi linéaire ou ramifié avec 1 à 3 atomes C, et pouvant être semblables ou différents, avec l'exception des composés p-$C_6H_4((CH_2)_2SiCl_3)_2$ et p-$C_6H_4((CH_2)_2Si)OCH_3)_3)_2$ et aussi des mélanges de o-, m-, p-$C_6H_4((CH_2)_2Si(OCH_3)_3)_2$ • $C_6H_4((CH_2)_2Si(OCH_3)_3)_2$.

2. Procédé pour la fabrication des composés suivant la revendication 1, caractérisé en ce que l'on fait réagir, en présence d'un catalyseur d'hydrosilylation, un composé doublement insaturé de formule:

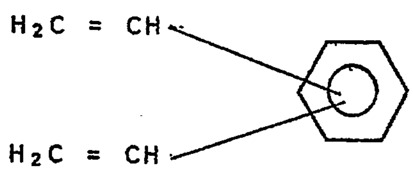

(2)

dans lequel le trois isomères concevables peuvent exister côte à côte, en rapport avec la position du substituant $H_2C = CH-$ sur le groupe phénylène, à une température de –78 à 200°C, et sous une pression qui correspond à la somme des pression partielles de composants du mélange réactionnel à la température utilisée, sans ou aveo utilisation d'un solvant, éventuellement en présence d'un composé répondant à la formule

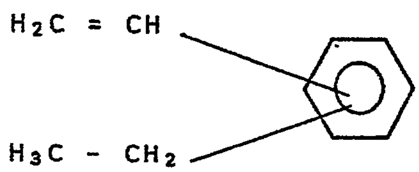

(3)

dans laquelle les trois isomères concevables en rapport avec la position des substituants $H_2C = CH-$ et $H_3C-CH_2-$ sur le groupe phénylène peuvent exister côte à côte, avec une proportion qui sera stoechiométrique ou en excès par rapport aux groupes vinyl présents de trichlorosilane ou de trialcoxysilane de formule:

$HSiR^2_3$, (4)

où $R^2$ représente un reste alcoxy linéaire ou ramifié, à 1 à 3 atomes de C, et purifie le produit, éventuellement par distillation, de préférence sous vide.

3. Procédé pour la fabrication des composés suivant la revendication (1) représente un reste alcoxy linéaire ou ramifié à 1 à 3 atomes de C, caractérisé en ce que l'on fait réagir un composé de formule:

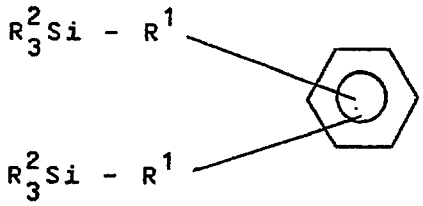

(1),

dans laquelle $R^2$ représente un chlorure, avec une proportion stoechiométrique, ou en excès, d'un alcool linéaire ou ramifié à 1 à 3 atomes C, à des températures de –20 à 200°C, jusqu'à libération à peu près totale, ou totale de la quantité théoriquement possible des gaz chlorhydrique, on élimine du produit l'excès éventuellement présent d'alcool, et/ou purifie le produit par distillation, de préférence sous vide.

4. Utilisation des organosilanes suivant la revendication 1 contenant de groupes phénylène que l'on peut obtenir suivant les revendications 2 et 3, pour la fabrication des organosiloxanes correspondants.